## Europäisches Patentamt

## European Patent Office

## Office européen des brevets

(11) Veröffentlichungsnummer : **0 413 231 B1**

(12)

# EUROPÄISCHE PATENTSCHRIFT

(45) Veröffentlichungstag der Patentschrift :
**09.06.93 Patentblatt 93/23**

(51) Int. Cl.⁵ : **C04B 35/00**

(21) Anmeldenummer : **90115114.2**

(22) Anmeldetag : **07.08.90**

(54) **Verfahren zur Herstellung eines anorganischen Sinterformteiles.**

(30) Priorität : **16.08.89 DE 3926869**
**08.01.90 DE 4000278**

(43) Veröffentlichungstag der Anmeldung :
**20.02.91 Patentblatt 91/08**

(45) Bekanntmachung des Hinweises auf die
Patenterteilung :
**09.06.93 Patentblatt 93/23**

(84) Benannte Vertragsstaaten :
**CH DE FR GB IT LI SE**

(56) Entgegenhaltungen :
**EP-A- 0 210 502**
**DE-A- 2 305 341**
**JP-A-57 137 312**

(73) Patentinhaber : **BASF Aktiengesellschaft**
**Carl-Bosch-Strasse 38**
**W-6700 Ludwigshafen (DE)**

(72) Erfinder : **Ter Maat, Johan Herman Hendrik**
**F 2,8**
**W-6800 Mannheim 1 (DE)**
Erfinder : **Schuette, Wilhelm, Dr.**
**Frankstrasse 5**
**W-6720 Speyer (DE)**
Erfinder : **Sterzel, Hans-Josef, Dr.**
**Wasgauring 3**
**W-6701 Dannstadt-Schauernheim (DE)**

EP 0 413 231 B1

## Beschreibung

Es ist bekannt, Formteile aus anorganischen Materialien dadurch herzustellen, daß man ein Keramikpulver oder ein Metallpulver mit einem thermoplastischen Harz vermischt, die Mischung zu einem grünen Formkörper verformt, das thermoplastische Harz entfernt und anschließend diesen abgemagerten Grünling zu dem Formkörper versintert. Gemäß der EP-B-125 912 wird der abgemagerte Grünling vor seiner Sinterung zu seiner im wesentlichen endgültigen Gestalt bearbeitet. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Grünling durch Erhitzen auf Temperaturen von 300 bis 550°C während 3 bis 8 Stunden entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanz und damit verbundener Rißbildung geschädigt wird. Aus diesem Grunde soll die Aufheiztemperatur nur 4°C/Stunde betragen. In der US-PS 4 671 912 werden sogar niedrigere Aufheizgeschwindigkeit von 1 bis 2°C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-B-115 104 empfohlen, als Bindemittel ein Gemisch aus einem oxidierten Paraffinwachs oder einem oxidierten mikrokristallinen Wachs mit einer höheren Fettsäure einzusetzen. In der EP-B-114 746 wird als Bindemittel ein Polyacetal vorgeschlagen.

Ein Nachteil bei allen diesen Verfahren, bei denen Thermoplaste oder Wachse eingesetzt werden, besteht darin, daß der Grünkörper zwecks pyrolytischer Entfernung des Bindemittels auf Temperaturen oberhalb des Erweichungspunktes des Bindemittels erhitzt werden muß, wodurch die Gefahr einer Verformung besteht. Zur Vermeidung einer solchen Verformung wird daher in der US-PS 4 708 838 und in der JP-OS 62/12674 vorgeschlagen, den Grünkörper in einem keramischen Pulver mit hoher thermischer Stabilität einzubetten.

Es ist aber auch bekannt, das Bindemittel aus dem Grünling nicht pyrolytisch sondern durch Extraktion mit einem Lösungsmittel zu entfernen. Gemäß der JP-OS 62/278160 wird als Lösungsmittel überkritisches Kohlendioxid bei 60°C und einen Druck von 200 kg/cm², gemäß der EP-B-206 685 flüssiges Kohlendioxid bei Temperaturen von -30°C bis 31,1°C eingesetzt. Für die Durchführung dieser Verfahren benötigt man jedoch spezielle Apparaturen.

Der vorliegenden Erfindung lag die Aufgabe zugrunde, ein Verfahren zur Herstellung eines anorganischen Sinterformteiles durch Verformen eines Gemisches aus einem sinterbaren anorganischen Pulver und Polyoxymethylen als Bindemittel durch Spritzgießen oder Strangpressen zu einem Grünkörper, Entfernen des Bindemittels und Sintern bereitzustellen, das die oben gezeigten Nachteile nicht aufweist und das insbesondere eine rasche Entfernung des Bindemittels aus dem Grünling ohne nachteilige Veränderungen des Grünlings gestattet.

Es wurde nun gefunden, daß diese Aufgabe dadurch gelöst werden kann, daß man das Polyoxymethylen durch Behandeln des Grünkörpers in einer gasförmigen säurehaltigen oder gasförmiges Bortrifluorid enthaltenden Atmosphäre entfernt.

Im einzelnen wird bei dem erfindungsgemäßen Verfahren so vorgegangen, daß man ein sinterbares anorganisches Pulver mit dem Polyoxymethylen z.B. in Form von Granulaten vermischt. Unter anorganischen Pulvern werden oxidische Keramikpulver, z.B. $Al_2O_3$, $ZrO_2$, $Y_2O_3$, aber auch nichtoxidische Keramikpulver wie SiC, $Si_3N_4$ oder Metallpulver wie Si, Fe mit Korngrößen von 0,1 bis 50 µm eingesetzt. Selbstverständlich können auch Mischungen dieser Substanzen eingesetzt werden. Als Polyoxymethylen setzt man sowohl Homopolymerisate als auch Copolymerisate mit Molmassen von 25.000 bis 75.000 ein. Unter Copolymerisaten seien die Polymerisate des Trioxans mit z.B. Ethylenoxid, 1,3-Dioxolan oder Butandiolformal verstanden, die in Mengen von z.B. 2 bis 4 Massen% vorliegen können.

Die zu verformenden Mischungen enthalten vorteilhaft neben den anorganischen Pulvern 10 bis 30 Gew.-% Polyoxymethylen als Kompromiß zwischen der erwünschten Fließfähigkeit der Mischung und einer hohen Packungsdichte des Pulvers. Außer den Pulvern können die Mischungen auch anorganische Fasern oder Whiskers enthalten, z.B. aus $Al_2O_3$, SiC oder $Si_3N_4$.

Zusätzlich können die Mischungen auch Netzmittel, Plastifiziermittel oder andere Hilfsmittel, die die rheologischen Eigenschaften der Mischungen bei der Verformung günstig beeinflussen, enthalten.

Die Herstellung der zu verformenden Massen erfolgt auf übliche Weise in einem Kneter oder Extruder bei Temperaturen von 150 bis 200°C. Falls erwünscht, kann die Masse abkühlen gelassen und anschließend granuliert werden.

Für die Verformung durch Spritzguß können die üblichen Schnecken- und Kolbenspritzgußmaschinen eingesetzt werden und bei Temperaturen von 175 bis 200°C und Drucken von 3.000 bis 20.000 kPa in eine Form, die auf 20 bis 80°C gehalten wird, verformt werden.

Die entformten Grünlinge werden dann erfindungsgemäß in einer (gasförmigen) säurehaltigen Atmosphä-

2

re zwecks Entfernung des Bindemittels behandelt. Unter (gasförmigen) säurehaltigen Atmosphären können sowohl reine Säuren verstanden werden, die bei den Behandlungstemperaturen gasförmig vorliegen, es können aber auch darunter Mischungen von Säuren mit einem Trägergas verstanden werden. Als Trägergase kommen beispielsweise Luft oder Stickstoff oder Edelgase in Betracht. Als Säuren kommen die anorganischen Säuren in Betracht, die bei Raumtemperatur gasförmig sind, z.B. die Halogenwasserstoffe, Schwefelwasserstoff oder solche Säuren, die bei den Behandlungstemperaturen in merklichem Umfang verdampfbar sind, z.B. Salpetersäure.

Als organische Säuren kommen grundsätzlich solche Säuren in Betracht, die einen Siedepunkt bei Normaldruck von unter 130°C haben, z.B. Ameisensäure, Essigsäure oder Trifluoressigsäure.

Anstelle der gasförmigen, säurehaltigen Atmosphäre können aber die entformten Grünlinge auch in einer gasförmigen Bortrifluorid enthaltenden Atmosphäre zwecks Entfernung des Bindemittels behandelt werden. Unter gasförmigen Bortrifluorid enthaltenden Atmosphären kann sowohl reines Bortrifluorid verstanden werden, es können aber auch darunter Mischungen von Bortrifluorid mit einem Trägergas verstanden werden. Als Trägergase kommen beispielsweise Luft oder Stickstoff oder Edelgase in Betracht.

Anstelle von Bortrifluorid können selbstverständlich auch Addukte von Bortrifluorid verwendet werden, die bei den Behandlungstemperaturen reversibel und ohne Zersetzung der Komponenten wieder in die Ausgangskomponenten gespalten werden können. Insbesondere geeignet sind die Additionsverbindungen des Bortrifluorids mit Ethern, z.B. Dimethylether, Diethylether, Dibutylether und tert.-Dibutylmethylether.

Der Grünling wird bei Temperaturen von 20 bis 150°C mit der säurehaltigen oder $BF_3$-haltigen Atmosphäre in Berührung gebracht. Vorzugsweise wendet man Temperaturen von 70 bis 130°C an. Von der Konzentration der Säure bzw. des $BF_3$ im Gas und der angewandten Temperatur hängt die Behandlungsdauer ab, wobei steigende Temperatur und steigende Konzentration der Säure die Behandlungsdauer abkürzen. Bei Verwendung eines Trägergases wird dieses z.B. zunächst durch die erhitzte Säure oder durch das $BF_3$ oder $BF_3$-Addukt geleitet und so mit der Säure bzw. dem $BF_3$ oder dem $BF_3$-Addukt beladen. Das beladene Trägergas wird dann auf die Behandlungstemperatur gebracht, die zweckmäßig mindestens 10°C über der Beladungstemperatur liegen sollte, um eine Kondensation zu vermeiden. Nach Verlassen des Behandlungsraumes kann die Säure bzw. das $BF_3$ aus der Gasmischung, die neben Formaldehyd, Trioxan auch weitere Zersetzungsprodukte des Polyoxymethylens enthält, zwecks Wiederverwendung auskondendiert werden.

Der so vom Bindemittel befreite Grünling wird dann in üblicher Weise bei den für das eingesetzte Material spezifischen Temperaturen versintert.

Das erfindungsgemäße Verfahren hat den Vorteil, daß durch die schonende Beseitigung des Bindemittels keine Rißbildungen zu beobachten sind. Wegen der niederen Temperaturen, die unterhalb des Erweichungspunktes des Bindemittels liegen, wird der Grünling nicht in unerwünschter Weise verformt und es ist keine aufwendige Einbettung des Grünlings erforderlich. Ein weiterer Vorteil ist die, im Vergleich mit dem Stand der Technik, sehr kurze Dauer der Behandlung zur Entfernung des Bindemittels.

Beispiel 1

25 g eines Polyoxymethylencopolymerisates aus Trioxan mit 2 Gew.-% Butandiolformal werden mit 119 g eines $Al_2O_3$-Pulvers mit einer durchschnittlichen Korngröße von 0.7 μm und 2,4 g Polyethylenglykol als Schmiermittel vermischt und in einem Laborkneter zu einem Granulat verarbeitet. Dieses Granulat wurde in einer Spritzgußmaschine zu Stäbchen mit den Abmessungen 6 x 4 x 50 mm verarbeitet.

Ein Stäbchen wurde bei einer Temperatur von 130°C 2 Stunden lang mit einer Gasmischung behandelt, die durch Durchleiten von 20 l/h Stickstoff durch auf 110°C beheizte 65 gew.-%ige Salpetersäure erhalten worden ist.

Der Gewichtsverlust des Stäbchens betrug 16,6 Gew.-%, im wesentlichen entsprechend dem Gehalt des eingesetzten Grünlings an Polymerisat.

Der rissefreie Grünling wurde anschließend bei einer Temperatur von 1600°C zu einem rissefreien Sinterkörper versintert. Die Dichte des Sinterkörpers war 3,65 g/cm$^3$.

Beispiel 2

75 g eines Polyoxymethylencopolymerisates aus Trioxan mit 2 Gew.-% Butandiolformal würden mit 270 g eines $Si_3N_4$-Pulvers mit einer durchschnittlichen Korngröße von 0.8 μm und 5 g Polyethylenglykol als Schmiermittel vermischt und in einem Laborkneter zu einem Granulat verarbeitet. Dieses Granulat wurde in einer Spritzgußmaschine zu Stäbchen mit den Abmessungen 6 x 4 x 50 mm verarbeitet.

Ein Stäbchen wurde bei einer Temperatur von 110°C 7,5 Stunden lang mit einer Gasmischung behandelt, die durch Durchleiten von 20 l/h Stickstoff durch auf 90°C beheizte Ameisensäure erhalten worden ist.

Der Gewichtsverlust des Stäbchens betrug 19,2 Gew.-% im wesentlichen entsprechend dem Gehalt des eingesetzten Grünlings an Polymerisat.

Beispiel 3

Der Grünkörper wurde, wie in Beispiel 2 beschrieben, behandelt. Anstelle von Ameisensäure wurde er 4 Stunden lang bei 80°C mit reinem HCl-Gas behandelt. Der Gewichtsverlust betrug 17,9 Gew.-%.

Beispiel 4

Der Grünkörper wurde, wie in Beispiel 2 beschrieben, behandelt. Jedoch wurde der Grünkörper mit einem Gas behandelt, das durch Durchleiten von 20 l/h-Stickstoff durch eine 90°C heiße 35 gew.-%ige Salzsäure erhalten worden ist. Die Behandlungsdauer betrug 2 Stunden, der Gewichtsverlust nach dieser Zeit 20,2 %.

Beispiel 5

450 Volumenteile eines Polyoxymethylen-Copolymerisats aus Trioxan mit 1,5 Gew.-% Butandiolformal wurden mit 550 Volumenteilen einer Mischung aus 93 Gew.-% $Si_3N_4$-Pulver, 2 Gew.-% $Al_2O_3$-Pulver und 5 Gew.-% $Y_2O_3$-Pulver mit einer durchschnittlichen Korngröße der Pulver von 0,5 bis 1 μm und Zugabe von 40 Volumenteilen Polyethylenglykol der mittleren Molmasse 400 g/Mol als Schmiermittel bei 180°C in einem Laborkneter vermischt und danach zu einem Granulat zerkleinert. Dieses Granulat wurde mittels einer Spritzgußmaschine zu Scheiben mit 80 mm Durchmesser und 4 mm Dicke verarbeitet. Dabei betrug die Massentemperatur 190°C, die Formtemperatur 105°C.

Die sich anschließende Entbinderung wurde in einem weitgehend dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit einer der spritzgegossenen Scheiben bestückt und zwar so, daß die Scheibe an einem Draht aufgehängt wurde, der durch das Gehäuse des Trockenschranks nach oben durchgeführt und mit einer Waage verbunden war, um kontinuierlich den Gewichtsverlust zu messen.

Danach wurde der Schrank 20 min lang mit einem Stickstoffstrom von 400 l/h durchströmt, um die Luft bis zu einem $O_2$-Gehalt kleiner als 1 - 2 Vol.-% zu verdrängen. Gleichzeitig wurde die Atmosphäre im Trockenschrank auf 150°C aufgeheizt. Die Entbinderung wurde gestartet mit dem Zudosieren von 10 l/h $BF_3$ zum Stickstoffstrom von 400 l/h, so daß die Konzentration des $BF_3$ in der Dosierung 2,5 Vol.-% betrug.

Bei einem Ausgangsgewicht der Scheibe von 46,2 g betrüg der Binderanteil 25,3 Gew.-%, entsprechend 11,7 g. Die folgende Tabelle zeigt die Gewichtsabnahme als Funktion der Zeit:

| Zeit (min) | Gewichtsabnahme (g) | Entbinderungsgrad (%) |
|---|---|---|
| 0 | 0 | 0 |
| 5 | 3,12 | 26,7 |
| 10 | 5,32 | 45,5 |
| 15 | 6,81 | 58,2 |
| 20 | 7,96 | 68,0 |
| 25 | 9,18 | 78,5 |
| 30 | 10,59 | 90,5 |
| 34 | 11,70 | 100 |

Nach dem Entfernen des Binders zeigte die Scheibe weder Risse noch irgendeine Dimensionsänderung.

Beispiel 6

Die gemäß Beispiel 5 hergestellten Scheiben wurden wie im Beispiel 5 beschrieben behandelt, jedoch mit dem Unterschied, daß dem Stickstoffstrom (400 l/h) anstelle des Bortrifluorids stündlich 50 g Bortrifluoriddiethyletherat zudosiert wurde und die Mischung innerhalb eines zu einer Spirale aufgewickelten 5 m langen Rohres mit einem Innendurchmesser von 3 mm aus rostfreiem Stahl auf 170°C erhitzt wurde. Das Gas wurde in den Trockenschrank geleitet, in dem sich eine Temperatur von 120°C einstellt.

Bei einem Ausgangsgewicht der Scheibe von 100,0 g betrüg der Binderanteil 12,7 Gew.-% entsprechend 12.7 g. Die folgende Tabelle zeigt die Gewichtsabnahme als Funktion der Zeit.

| Zeit (min) | Gewichtsabnahme (g) | Entbinderungsgrad (%) |
|---|---|---|
| 0 | 0 | 0 |
| 5 | 3,71 | 29,2 |
| 10 | 5,79 | 45,6 |
| 15 | 7,01 | 55,2 |
| 20 | 8,53 | 67,2 |
| 25 | 10,01 | 78,8 |
| 30 | 11,80 | 92,9 |
| 35 | 12,11 | 95,4 |
| 40 | 12,32 | 97,0 |

Danach wurde die Scheibe innerhalb von 1 h auf 400°C gehalten. Dabei nahm das Gewicht um weitere 0,38 g ab, entsprechend einem Entbinderungsgrad von 100 %. Die Scheibe zeigte weder Risse noch irgendeine Dimensionsänderung.

## Patentansprüche

1. Verfahren zur Herstellung eines anorganischen Sinterformteiles durch Verformen eines Gemisches aus einem sinterbaren anorganischen Pulver und Polyoxymethylen als Bindemittel durch Spritzgießen oder Strangpressen zu einem Grünkörper, Entfernen des Bindemittels und Sintern, dadurch gekennzeichnet, daß man das Polyoxymethylen durch Behandeln des Grünkörpers in einer gasförmige Säure oder gasförmiges Bortrifluorid enthaltenden Atmosphäre entfernt.

2. Verfahren nach Anspruch 1, dadurch gekennzeichnet, daß man die Behandlung bei Temperaturen von 20 bis 150°C durchführt.

3. Verfahren nach Ansprüchen 1 bis 2, dadurch gekennzeichnet, daß man als Säuren Salpetersäure, Halogenwasserstoffsäuren und/oder organische Säuren mit einem Siedepunkt unter 130°C verwendet.

4. Verfahren nach Ansprüchen 1 bis 3, dadurch gekennzeichnet, daß man Ameisensäure verwendet.

## Claims

1. A process for the production of an inorganic sintered molding by shaping a mixture of a sinterable inorganic powder and polyoxymethylene as a binder by injection molding or extrusion to give a green compact, removing the binder and sintering, wherein the polyoxymethylene is removed by treating the green compact in a gaseous acid or an atmosphere containing gaseous boron trifluoride.

2. A process as claimed in claim 1, wherein the treatment is carried out at from 20 to 150°C.

3. A process as claimed in claim 1 or 2, wherein the acids used are nitric acid, hydrohalic acids or organic acids having a boiling point of less than 130°C.

4. A process as claimed in any of claims 1 to 3, wherein formic acid is used.

**Revendications**

1. Procédé de fabrication d'une pièce frittée inorganique, par formage d'un mélange d'une poudre inorganique frittable et de polyoxyméthylène servant de liant, par moulage par injection ou extrusion, en un corps vert, élimination du liant et frittage, caractérisé en ce qu'on élimine le polyoxyméthylène par traitement du corps vert dans une atmosphère contenant un acide gazeux ou du trifluorure de bore gazeux.

2. Procédé selon la revendication 1, caractérisé en ce qu'on effectue le traitement à des températures de 20 à 150°C.

3. Procédé selon la revendication 1 ou 2, caractérisé en ce qu'on utilise, comme acide, de l'acide nitrique, des hydracides halogénés et/ou de: acides organiques ayant un point d'ébullition inférieur à 130°C.

4. Procédé selon l'une quelconque des revendications 1 à 3, caractérisé en ce qu'on utilise de l'acide formique.